# FASCICULE DE BREVET EUROPEEN

(11) **EP 3 859 202 B1**
(45) Date de publication et mention de la délivrance du brevet: **27.04.2022**
(21) Numéro de dépôt: 20188111.7
(22) Date de dépôt: 28.07.2020
(51) Int. Cl.: F21S 8/06, F21V 21/104, F21V 21/112, F21V 17/08, H02G 3/20, H02G 3/32, H02G 15/007, F21V 21/02

(54) **SUPPORT DE POTENCE DE LUMINAIRES D'INTÉRIEUR POUR SERRER FERMEMENT UN CÂBLE ÉLECTRIQUE ISOLÉ**
STÜTZE FÜR INNENLEUCHTEN ZUM FESTKLEMMEN EINES ISOLIERTEN ELEKTROKABELS
INDOOR LIGHT FITTING BRACKET SUPPORT FOR FIRMLY TIGHTENING AN INSULATED ELECTRIC CABLE

(30) Priorité: 31.01.2020 FR 2000983
(43) Date de publication de la demande: 04.08.2021
(73) Titulaire: JJA, 93155 Le Blanc-Mesnil Cedex (FR)
(72) Inventeur: DEMERY, Julien, 95270 Belloy (FR)
(74) Mandataire: Dennemeyer & Associates S.A.

(56) Documents cités:
- EP-A2- 2 086 080
- WO-A1-2020/006595
- JP-A- H10 106 335

## Description

La présente invention concerne le domaine technique des support de potence de luminaires d'intérieur.

EP 2086080 concerne un dispositif de suspension de plafond pour suspendre un objet dans un câble, un cordon ou une ficelle à partir d'un plafond, ledit dispositif comprend un raccord de plafond, un couvercle ou un boîtier et un dispositif de suspension.

WO 2020006595 montre un support pour une lumière pendante.

Le problème technique que se propose de résoudre la présente invention est de présenter une suspension luminaire alimentée en électricité pour le compte des magasins et des lieux d'expositions (showroom) comportant un support simple d'installation et sans aucun risque pour l'employé tout en répondant aux normes européennes en vigueur.

L'innovation technique réside dans le fait que le support de la présente invention remplace la fixation connue présente sur les luminaires afin de la suspendre de manière efficace et sans danger. Le support de la présente invention répond à de nombreuses contraintes normatives (contrainte de traction norme EN60598-1). Le support de la présente invention prend en étau le câble électrique isolé du luminaire. La deuxième contrainte à laquelle le support de la présente invention répond est de ne pas endommager le câble électrique isolé du luminaire (càd de ne pas fragiliser la gaine du câble pour ne pas rendre les fils électriques apparent). La forme du support de la présente invention permet d'être posée sur un rail d'une suspension luminaire et d'être fixé sur celui-ci (pour éviter la chute).

Le support de la présente invention est composé de 2 parties jointes horizontalement entre elles à l'aide de deux vis . Les deux parties du support sont identiques.

### Résumé de l'invention :

La présente invention concerne un support (1) de potence de luminaires d'intérieur pour serrer fermement un câble électrique isolé (C), ledit support (1) comprenant :
a) un premier corps (2) comprenant une face avant (3), une paroi arrière (4), une première paroi latérale (5) possédant une première partie supérieure (5A) et une première partie inférieure (5B), ladite première partie supérieure (5A) faisant saillie par rapport à ladite première partie inférieure (5B), une deuxième paroi latérale (6) possédant une deuxième partie supérieure (6A) et une deuxième partie inférieure (6B), ladite deuxième partie supérieure (6A) faisant saillie par rapport à ladite deuxième partie inférieure (6B),
b) un deuxième corps (7) comprenant une face avant (8), une paroi arrière (9), une première paroi latérale (10) possédant une première partie supérieure (10A) et une première partie inférieure (10B), ladite première partie supérieure (10A) faisant saillie par rapport à ladite première partie inférieure (10B), une deuxième paroi latérale (11) possédant une deuxième partie supérieure (11A) et une deuxième partie inférieure (11B), ladite deuxième partie supérieure (11A) faisant saillie par rapport à ladite deuxième partie inférieure (11B),
c) la paroi arrière (4) du premier corps (2) et la paroi arrière (9) du deuxième corps (7) comprennent chacune au-moins une fente (12A ; 12B) verticale sur toute leur hauteur et lesdites fentes (12A ; 12B) se faisant face et étant adaptées pour serrer fermement un câble électrique isolé (C),
d) la paroi arrière (4) du premier corps (2) faisant face à la paroi arrière (9) du deuxième corps (7) et en ce que ladite paroi arrière (4) du premier corps (2) étant solidement fixée contre ladite paroi arrière (9) du deuxième corps (7) au moyen d'un moyen de fixation (16A ;16B) traversant horizontalement ou de biais chacune desdites parois arrières, caractérisé en ce que
e) la partie supérieure centrale desdits premiers et deuxièmes corps (2;7) comportant chacune un affaissement (13A ;13B), et en ce que
f) un passage (14A) adapté pour un moyen de fixation (15A) traverse verticalement la première partie supérieure faisant saillie de chacun des premier et deuxième corps, et en ce que
g) un passage (14B) adapté pour un moyen de fixation (15B) traverse verticalement la deuxième partie supérieure faisant saillie de chacun des premier et deuxième corps.

De préférence, la paroi arrière (4) du premier corps (2) et la paroi arrière (9) du deuxième corps (7) comprennent chacune une fente (12A ;12B) centrale verticale sur toute leur hauteur.

De préférence, chaque fente comporte des aspérités afin d'éviter le glissement du câble.

De préférence, la face avant (3) du premier corps (2) et la face avant (8) du deuxième corps (7) sont creuses ou extrudées.

De préférence, la paroi arrière (4) du premier corps (2) et la paroi arrière (9) du deuxième corps (7) sont planes et/ou lisses.

De préférence, le moyen de fixation (16A ;16B) traversant horizontalement chacune desdites parois arrières est une vis et un écrou.

De préférence, le moyen de fixation (15A ;15B) traversant verticalement les premières et deuxièmes parties supérieures faisant saillie de chacun des premier et deuxième corps est une vis.

De préférence, le passage (14A ; 14B) est fileté et étant adapté pour coopérer avec le moyen de fixation (15A, 15B).

De préférence, le passage (14A ;14B) comporte un pas de vis métallique étant adapté pour coopérer avec le moyen de fixation (15A, 15B).

De préférence, chacune desdites parois arrières (4 ;9) comporte un ergot (17A ; 17B) faisant face à un orifice complémentaire (18A ; 18B) à l'ergot où l'ergot s'encastre.

De préférence, le support est réalisé en une matière plastique.

Le support de la présente invention est composé de 2 parties jointes entre elles à l'aide de deux vis, qui peuvent être placées horizontalement ou de biais. Les deux parties du support sont identiques (symétriques) et peuvent s'écarter ou se rapprocher l'une de l'autre en fonction de la force du vissage.

L'affaissement (13A ; 13B) de la partie supérieure centrale desdits premiers et deuxièmes corps (2;7) est une caractéristique essentielle de l'invention car elle permet de courber le câble électrique de manière optimale à l'intérieur de la suspension luminaire sans que celui-ci rompe (càd d'éviter tout endommagement du câble).

Dans un autre mode de réalisation, chaque partie supérieure (5A, 6A, 10A, 11A) faisant saillie par rapport à ladite première partie inférieure (5B) comprend au-moins une fente verticale distincte sur toute leur hauteur, càd au-moins 4 fentes verticales sont présentes au total sur les parties supérieures du support.

Toutes les caractéristiques mentionnées précédemment peuvent être combinées entre elles.

EP 2086080 est considéré comme l'état de la technique le plus proche.

EP 2086080 divulgue : Un support (35) de potence de luminaires d'intérieur pour serrer fermement un câble électrique isolé (1), ledit support comprenant:
a. un premier corps (35') comprenant une face avant, une paroi arrière (41, face arrière), une première paroi latérale (45) possédant une première partie supérieure et une première partie inférieure, une deuxième paroi latérale (45) possédant une deuxième partie supérieure et une deuxième partie inférieure,
b. un deuxième corps (35") comprenant une face avant, une paroi arrière (41, face arrière), une première paroi latérale (45) possédant une première partie supérieure et une première partie inférieure, une deuxième paroi latérale (45) possédant une deuxième partie supérieure et une deuxième partie inférieure, et:
   la paroi arrière (41) du premier corps (35') et la paroi arrière du deuxième corps (35") comprennent chacune au-moins une fente (29) verticale sur toute leur hauteur et lesdites fentes (12A ; 12B) se faisant face et étant adaptées pour serrer fermement un câble électrique isole (51), et
   la paroi arrière du premier corps (35') faisant face à la paroi arrière du deuxième corps (35") et ladite paroi arrière du premier corps étant solidement fixée contre ladite paroi arrière du deuxième corps par un moyen de fixation (39) traversant chacune desdites parois arrières.

Par conséquent, l 'objet de la revendication 1 diffère de ce support connu en ce que
les premières parties supérieures font saillie par rapport aux premières partie inferieures, les deuxièmes parties supérieures font saillie par rapport aux deuxièmes parties inférieures la partie supérieure centrale desdits premiers et deuxièmes corps comportant chacun un affaissement et que un passage adapté pour un moyen de fixation traverse verticalement la première partie supérieure faisant saillie de chacun des premier et deuxième corps, et en ce que un passage adapté pour un moyen de fixation traverse verticalement la deuxième partie supérieure faisant saillie de chacun des premier et deuxième corps.; il est donc nouveau.

Le problème que la présente invention se propose de résoudre peut être considéré comme présenter une suspension luminaire alimentée en électricité (pour le compte des magasins et des lieux d'expositions) comportant un support simple d'installation (rail) et sans aucun risque pour l'employé tout en répondant aux normes européennes en vigueur..

La solution à ce problème, proposée dans la revendication 1 de la présente demande, est considérée comme impliquant une activité inventive pour les motifs suivants : la forme diffère trop du support en deux parties selon EP2086080 pour que l 'homme de l'art, sans indication dans l'état de la technique, réalise les modifications.

### Figures de la présente invention :

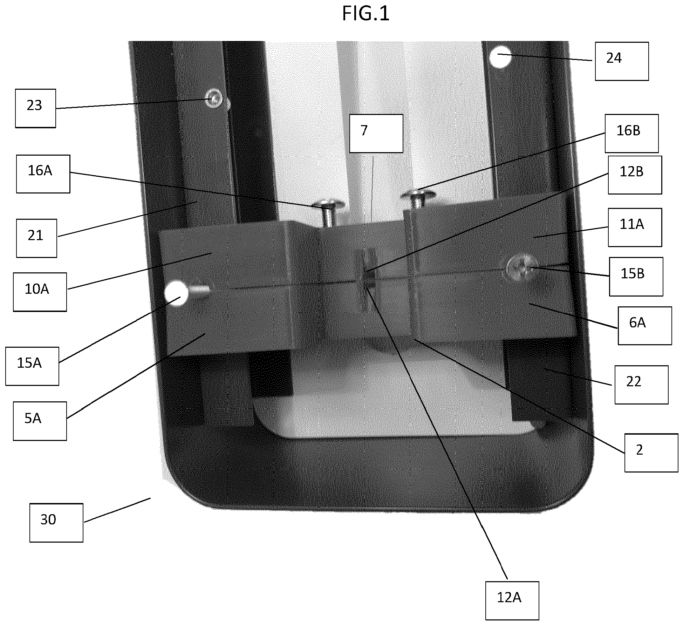

La figure 1 montre le support de la présente invention fixé sur deux rails (21,22) d'une suspension luminaire (30) à l'aide de vis (15A,15B) traversant le support de manière verticale et rejoignant un pas de vis (23,24) sur chaque rail. Le câble électrique isolé n'est pas représenté sur cette figure. Les vis horizontales (16A, 16B) sont représentées.

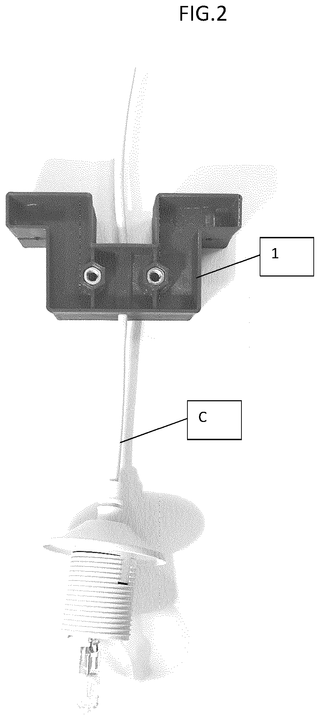

La figure 2 montre le support de la présente invention prenant en étau le câble électrique isolé (C) d'une ampoule.

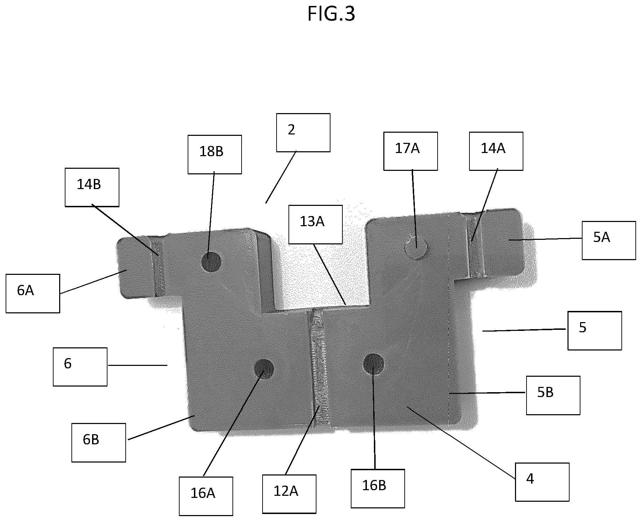

La figure 3 montre un premier corps (2) comprenant une paroi arrière (4) plane, une première paroi latérale (5) possédant une première partie supérieure (5A) et une première partie inférieure (5B), ladite première partie supérieure (5A) faisant saillie par rapport à ladite première partie inférieure (5B), une deuxième paroi latérale (6) possédant une deuxième partie supérieure (6A) et une deuxième partie inférieure (6B), ladite deuxième partie supérieure (6A) faisant saillie par rapport à ladite deuxième partie inférieure (6B). La figure 3 met aussi en évidence la fente verticale (12A) comportant des aspérités ainsi que l'ergot (17A) et une partie complémentaire (18B) à l'ergot du deuxième corps (7) (non montré) et deux passages (14A ; 14B) adaptés pour un moyen de fixation traversant verticalement la première partie supérieure (5A) et la deuxième partie supérieure (6A) ainsi que les orifices des moyen de fixation (16A ;16B) traversant horizontalement la paroi arrière (4).

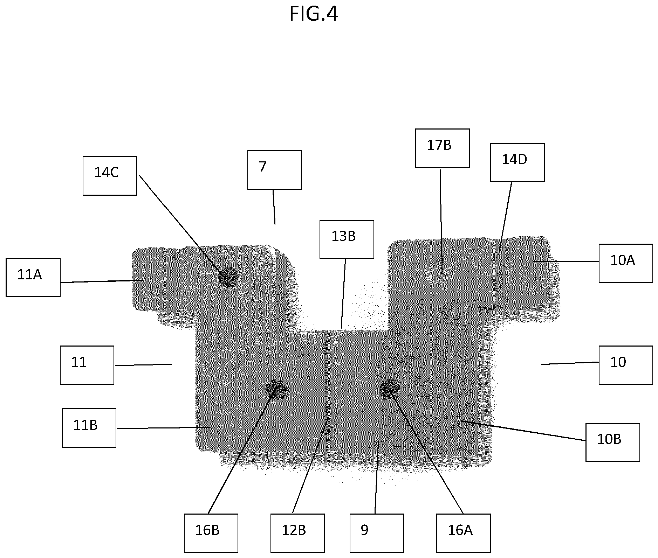

La figure 4 montre un deuxième corps (7) comprenant une paroi arrière (9) plane, une première paroi latérale (10) possédant une première partie supérieure (10A) et une première partie inférieure (10B), ladite première partie supérieure (10A) faisant saillie par rapport à ladite première partie inférieure (10B), une deuxième paroi latérale (11) possédant une deuxième partie supérieure (11A) et une deuxième partie inférieure (11B), ladite deuxième partie supérieure (11A) faisant saillie par rapport à ladite deuxième partie inférieure (11B). La figure 4 met aussi en évidence la fente (12B) comportant des aspérités ainsi que l'ergot (17B) et une partie complémentaire (18A) à l'ergot du premier corps (2) (non montré) et deux passages (14C ;14D) adaptés pour un moyen de fixation traversant verticalement la première partie supérieure (10A) et la deuxième partie supérieure (11A) ainsi que les orifices des moyen de fixation (16A ;16B) traversant horizontalement la paroi arrière (9).

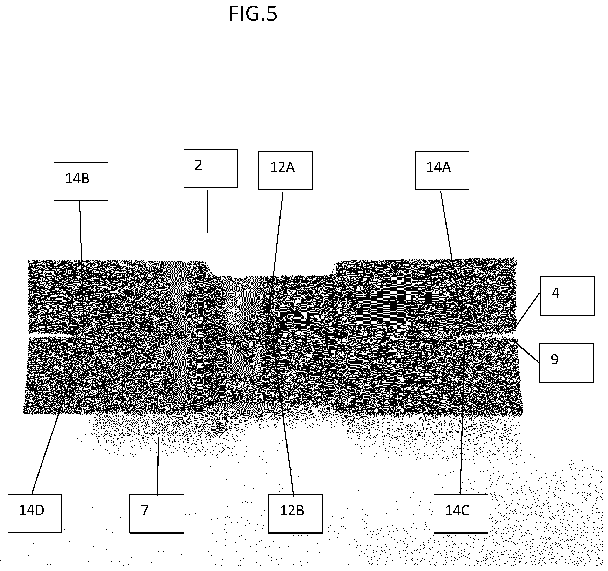

La figure 5 montre une vue du dessus du support de la présente invention mettant en évidence les parois arrières (4 ;9) se faisant face ainsi qu'une fente (12A ;12B) verticale sur toute la hauteur de chaque paroi arrière (4 ;9) et lesdites fentes (12A ;12B) se faisant face et étant adaptées pour serrer fermement un câble électrique isolé. La figure 5 montre aussi un passage (14A ;14C) adapté pour un moyen de fixation traversant verticalement la première partie supérieure faisant saillie de chacun des premier (2) et deuxième (7) corps, et un passage (14B ;14D) adapté pour un moyen de fixation traversant verticalement la deuxième partie supérieure faisant saillie de chacun des premier et deuxième corps.

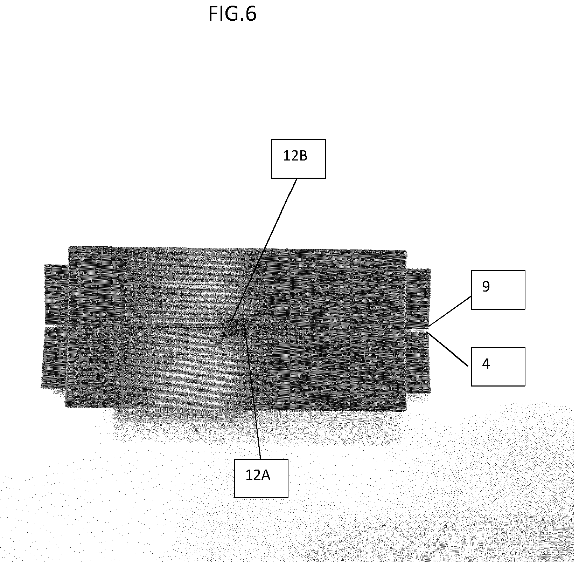

La figure 6 montre une vue du dessous du support de la présente invention mettant en évidence les parois arrières (4 ;9) se faisant face ainsi qu'une fente (12A ;12B) verticale sur toute la hauteur de chaque paroi arrière (4 ;9) et lesdites fentes (12A ;12B) se faisant face et étant adaptées pour serrer fermement un câble électrique isolé.

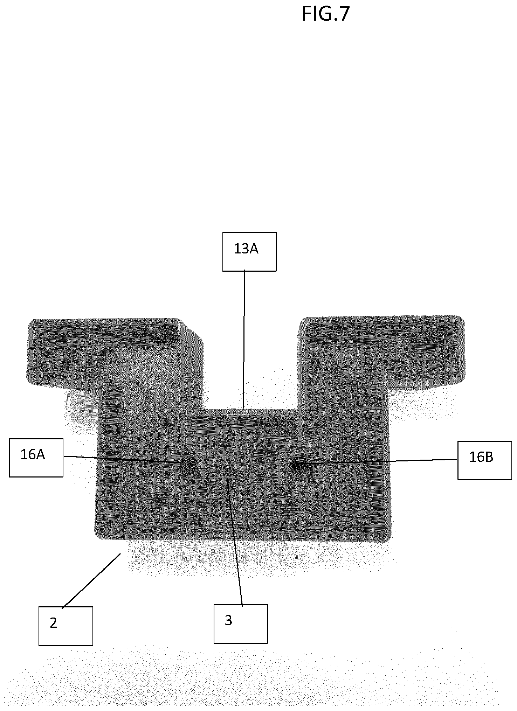

La figure 7 montre un premier corps (2) comprenant une face avant (3) creuse et lisse.

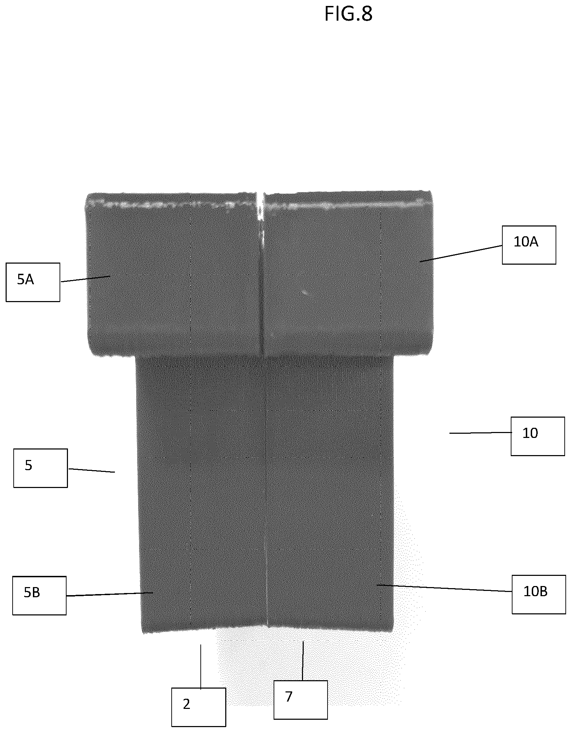

La figure 8 montre un premier corps (2) comprenant une première paroi latérale (5) possédant une première partie supérieure (5A) et une première partie inférieure (5B), ladite première partie supérieure (5A) faisant saillie par rapport à ladite première partie inférieure (5B), et un deuxième corps (7) comprenant une première paroi latérale (10) possédant une première partie supérieure (10A) et une première partie inférieure (10B), ladite première partie supérieure (10A) faisant saillie par rapport à ladite première partie inférieure (10B).

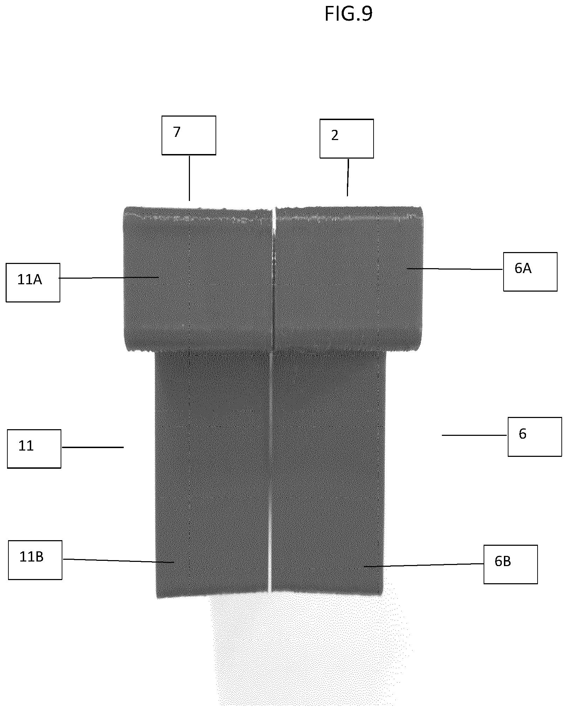

La figure 9 montre un premier corps (2) comprenant une deuxième paroi latérale (6) possédant une deuxième partie supérieure (6A) et une deuxième partie inférieure (6B), ladite deuxième partie supérieure (6A) faisant saillie par rapport à ladite deuxième partie inférieure (6B), et un deuxième corps (7) comprenant une deuxième paroi latérale (11) possédant une deuxième partie supérieure (11A) et une deuxième partie inférieure (11B), ladite deuxième partie supérieure (11A) faisant saillie par rapport à ladite deuxième partie inférieure (11B).

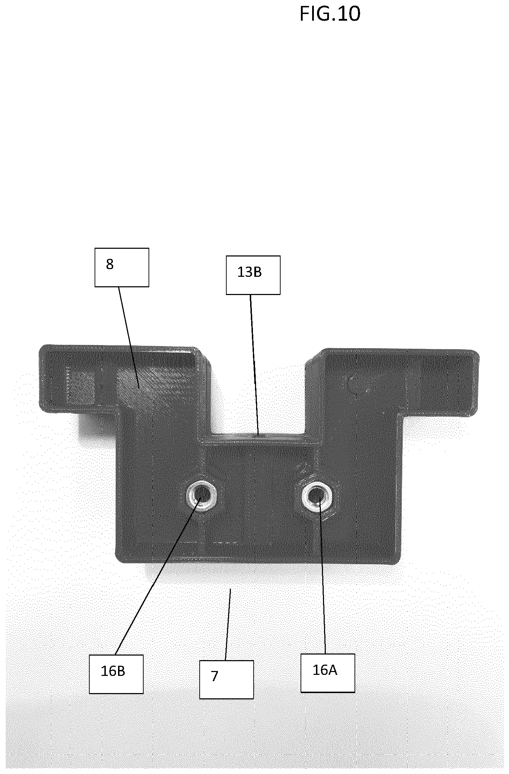

La figure 10 montre le deuxième corps (7) comprenant une face avant (8) creuse et mettant en évidence les orifices destinées aux moyen de fixation (16A ;16B) traversant horizontalement la paroi arrière.

## Revendications

1. Support (1) de potence de luminaires d'intérieur pour serrer fermement un câble électrique isolé (C), ledit support (1) comprenant :
a) un premier corps (2) comprenant une face avant (3), une paroi arrière (4), une première paroi latérale (5) possédant une première partie supérieure (5A) et une première partie inférieure (5B), ladite première partie supérieure (5A) faisant saillie par rapport à ladite première partie inférieure (5B), une deuxième paroi latérale (6) possédant une deuxième partie supérieure (6A) et une deuxième partie inférieure (6B), ladite deuxième partie supérieure (6A) faisant saillie par rapport à ladite deuxième partie inférieure (6B),
b) un deuxième corps (7) comprenant une face avant (8), une paroi arrière (9), une première paroi latérale (10) possédant une première partie supérieure (10A) et une première partie inférieure (10B), ladite première partie supérieure (10A) faisant saillie par rapport à ladite première partie inférieure (10B), une deuxième paroi latérale (11) possédant une deuxième partie supérieure (11A) et une deuxième partie inférieure (11B), ladite deuxième partie supérieure (11A) faisant saillie par rapport à ladite deuxième partie inférieure (11B),
c) la paroi arrière (4) du premier corps (2) et la paroi arrière (9) du deuxième corps (7) comprenant chacune au-moins une fente (12A ;12B) verticale sur toute leur hauteur et lesdites fentes (12A ;12B) se faisant face et étant adaptées pour serrer fermement un câble électrique isolé (C),
d) la paroi arrière (4) du premier corps (2) faisant face à la paroi arrière (9) du deuxième corps (7), ladite paroi arrière (4) du premier corps (2) étant solidement fixée contre ladite paroi arrière (9) du deuxième corps (7) par un moyen de fixation (16A ;16B) traversant chacune desdites parois arrières, caractérisé et en ce que
e) la partie supérieure centrale desdits premiers et deuxièmes corps (2;7) comportent chacune un affaissement (13A ;13B), et en ce que
f) un passage (14A, 14C) adapté pour un moyen de fixation (15A) traverse verticalement la première partie supérieure faisant saillie de chacun des premier et deuxième corps, et en ce que
g) un passage (14B, 14D) adapté pour un moyen de fixation (15B) traverse verticalement la deuxième partie supérieure faisant saillie de chacun des premier et deuxième corps.

2. Support selon la revendication 1, dans lequel la paroi arrière (4) du premier corps (2) et la paroi arrière (9) du deuxième corps (7) comprennent chacune la fente (12A ;12B) centrale verticale sur toute leur hauteur.

3. Support selon la revendication 2, dans lequel la fente comporte des aspérités.

4. Support selon la revendication 1, dans lequel la face avant (3) du premier corps (2) et la face avant (8) du deuxième corps (7) sont creuses.

5. Support selon la revendication 1, dans lequel la paroi arrière (4) du premier corps (2) et la paroi arrière (9) du deuxième corps (7) sont planes.

6. Support selon la revendication 1, dans lequel le moyen de fixation (16A ;16B) traversant horizontalement chacune desdites parois arrières est une vis.

7. Support selon la revendication 1, dans lequel le moyen de fixation (15A ;15B) traversant verticalement les premières et deuxièmes parties supérieures faisant saillie de chacun des premier et deuxième corps est une vis.

8. Support selon la revendication 1, dans lequel le passage (14A ;14B) est fileté et étant adapté pour coopérer avec le moyen de fixation (15A,15B).

9. Support selon la revendication 8, dans lequel le passage (14A ;14B) comporte un pas de vis métallique étant adapté pour coopérer avec le moyen de fixation (15A,15B).

10. Support selon la revendication 1, dans lequel chacune desdites parois arrières (4 ;9) comporte un ergot (17A ;17B) faisant face à un orifice complémentaire (18A ;18B) à l'ergot.

11. Support selon la revendication 1, dans lequel ladite paroi arrière (4) du premier corps (2) étant solidement fixée contre ladite paroi arrière (9) du deuxième corps (7) par ledit moyen de fixation (16A ;16B) traversant horizontalement chacune desdites parois arrières.

12. Support selon la revendication 1, réalisé en matière plastique.

## Patentansprüche

1. Halterung (1) eines Vorbaus für Innenleuchten zum Festklemmen eines isolierten Elektrokabels (C), wobei die genannte Halterung (1) umfasst:
a) einen ersten Körper (2), der eine Vorderseite (3), eine Rückwand (4), eine erste Seitenwand (5) umfasst, die einen ersten oberen Teil (5A) und einen ersten unteren Teil (5B) besitzt, wobei der genannte erste obere Teil (5A) im Verhältnis zu dem genannten ersten unteren Teil (5B) vorsteht, eine zweite Seitenwand (6), die einen zweiten oberen Teil (6A) und einen zweiten unteren Teil (6B) besitzt, wobei der genannte zweite obere Teil (6A) im Verhältnis zu dem genannten zweiten unteren Teil (6B) vorsteht,
b) einen zweiten Körper (7), der eine Vorderseite (8), eine Rückwand (9), eine erste Seitenwand (10) umfasst, die einen ersten oberen Teil (10A) und einen ersten unteren Teil (10B) besitzt, wobei der genannte erste obere Teil (10A) im Verhältnis zu dem genannten ersten unteren Teil (10B) vorsteht, eine zweite Seitenwand (11), die einen zweiten oberen Teil (11A) und einen zweiten unteren Teil (11B) besitzt, wobei der genannte zweite obere Teil (11A) im Verhältnis zu dem genannten zweiten unteren Teil (11B) vorsteht,
c) wobei die Rückwand (4) des ersten Körpers (2) und die Rückwand (9) des zweiten Körpers (7) jeweils mindestens einen vertikalen Schlitz (12A;12B) über ihre gesamte Höhe umfassen, und wobei die genannten Schlitze (12A;12B) einander zugewandt und angepasst sind, ein isoliertes Elektrokabel (C) festzuklemmen,
d) wobei die Rückwand (4) des ersten Körpers (2) der Rückwand (9) des zweiten Körpers (7) zugewandt ist, die genannte Rückwand (4) des ersten Körpers (2) fest an der genannten Rückwand (9) des zweiten Körpers (7) durch ein Befestigungsmittel (16A;16B) befestigt ist, das jede der genannten Rückwände durchquert, **dadurch gekennzeichnet, dass**
e) der mittlere obere Teil des genannten ersten und zweiten Körpers (2;7) jeweils eine Vertiefung (13A;13B) aufweist, und dass
f) ein Durchgang (14A, 14C), der für ein Befestigungsmittel (15A) angepasst ist, den ersten oberen Teil durchquert, der von jedem des ersten und zweiten Körpers vorsteht, und dass
g) ein Durchgang (14B, 14D), der für ein Befestigungsmittel (15B) angepasst ist, den zweiten oberen Teil vertikal durchquert, der von jedem des ersten und zweiten Körpers vorsteht.

2. Halterung nach Anspruch 1, wobei die Rückwand (4) des ersten Körpers (2) und die Rückwand (9) des zweiten Körpers (7) jeweils über ihre gesamte Höhe den vertikalen Mittelschlitz (12A;12B) umfassen.

3. Halterung nach Anspruch 2, wobei der Schlitz Unebenheiten aufweist.

4. Halterung nach Anspruch 1, wobei die Vorderseite (3) des ersten Körpers (2) und die Vorderseite (8) des zweiten Körpers (7) hohl sind.

5. Halterung nach Anspruch 1, wobei die Rückwand (4) des ersten Körpers (2) und die Rückwand (9) des zweiten Körpers (7) eben sind.

6. Halterung nach Anspruch 1, wobei das Befestigungsmittel (16A;16B), das jede der genannten Rückwände horizontal durchquert, eine Schraube ist.

7. Halterung nach Anspruch 1, wobei das Befestigungsmittel (15A;15B), das den ersten und zweiten oberen Teil vertikal durchquert, die von jedem des ersten und zweiten Körpers vorstehen, eine Schraube ist.

8. Halterung nach Anspruch 1, wobei der Durchgang (14A;14B) mit einem Gewinde versehen und angepasst ist, um mit dem Befestigungsmittel (15A, 15B) zusammenzuwirken.

9. Halterung nach Anspruch 8, wobei der Durchgang (14A;14B) ein Metallschraubengewinde aufweist, das angepasst ist, um mit dem Befestigungsmittel (15A, 15B) zusammenzuwirken.

10. Halterung nach Anspruch 1, wobei jede der genannten Rückwände (4;9) einen Ansatz (17A;17B) aufweist, der einer zu dem Ansatz komplementären Öffnung (18A; 18B) zugewandt ist.

11. Halterung nach Anspruch 1, wobei die genannte Rückwand (4) des ersten Körpers (2) durch das genannte Befestigungsmittel (16A;16B), das jede der genannten Rückwände horizontal durchquert, fest an der genannten Rückwand (9) des zweiten Körpers (7) befestigt ist.

12. Halterung nach Anspruch 1, hergestellt aus Kunststoffmaterial.

## Claims

1. Indoor light fitting bracket support (1) for firmly tightening an insulated electric cable (C), said bracket (1) comprising:
a) a first body (2) comprising a front face (3), a rear wall (4), a first side wall (5) having a first upper part (5A) and a first lower part (5B), said first upper part (5A) projecting from said first lower part (5B), a second side wall (6) having a second upper part (6A) and a second lower part (6B), said second upper part (6A) projecting from said second lower part (6B),
b) a second body (7) comprising a front face (8), a rear wall (9), a first side wall (10) having a first upper part (10A) and a first lower part (10B), said first upper part (10A) projecting from said first lower part (10B), a second side wall (11) having a second upper part (11A) and a second lower part (11B), said second upper part (11A) projecting from said second lower part (11B),
c) the rear wall (4) of the first body (2) and the rear wall (9) of the second body (7) each comprising at least one vertical slot (12A; 12B) over their entire height and said slots (12A; 12B) facing one another and being adapted to firmly tighten an insulated electric cable (C),
d) the rear wall (4) of the first body (2) facing the rear wall (9) of the second body (7), said rear wall (4) of the first body (2) being firmly fixed against said rear wall (9) of the second body (7) by a fastening means (16A; 16B) passing through each of the said rear walls, **characterised in that**
e) the upper central part of said first and second bodies (2; 7) each comprise a depression (13A; 13B), and **in that**
f) a passage (14A, 14C) adapted for a fastening means (15A) passes vertically through the first upper part projecting from each of the first and second bodies, and **in that**
g) a passage (14B, 14D) adapted for a fastening means (15B) passes vertically through the second upper part projecting from each of the first and second bodies.

2. Support according to Claim 1, wherein the rear wall (4) of the first body (2) and the rear wall (9) of the second body (7) each comprise the vertical central slot (12A; 12B) over their entire height.

3. Support according to Claim 2, wherein the slot has rough surfaces.

4. Support according to Claim 1, wherein the front face (3) of the first body (2) and the front face (8) of the second body (7) are hollow.

5. Support according to Claim 1, wherein the rear wall (4) of the first body (2) and the rear wall (9) of the second body (7) are flat.

6. Support according to Claim 1, wherein the fastening means (16A; 16B) passing horizontally through each of said rear walls is a screw.

7. Support according to Claim 1, wherein the fastening means (15A; 15B) passing vertically through the first and second upper parts projecting from each of the first and second bodies is a screw.

8. Support according to Claim 1, wherein the passage (14A; 14B) is threaded and adapted to cooperate with the fastening means (15A, 15B).

9. Support according to Claim 8, wherein the passage (14A; 14B) comprises a metal screw thread adapted to cooperate with the fastening means (15A, 15B).

10. Support according to Claim 1, wherein each of said rear walls (4; 9) comprises a lug (17A; 17B) facing an orifice (18A; 18B) that is complementary to the lug.

11. Support according to Claim 1, wherein said rear wall (4) of the first body (2) is firmly fixed against said rear wall (9) of the second body (7) by said fastening means (16A; 16B) passing horizontally through each of said rear walls.

12. Support according to Claim 1, made of plastic material.
